# EUROPÄISCHE PATENTSCHRIFT

(11) **EP 1 186 479 B1**
(45) Veröffentlichungstag und Bekanntmachung des Hinweises auf die Patenterteilung: **06.10.2004**
(21) Anmeldenummer: 01128889.1
(22) Anmeldetag: 01.07.1999
(51) Int. Cl.: B60R 21/32, B60R 21/01

(54) **Schaltungsanordnung, bestehend aus einem Zündelement für einen Gurtstraffer und einem Gurtbetriebssensor**
Circuit configuration consisting of a firing element for a belt-tensioner and a belt operation sensor
Circuiterie comprenant un élément d'allumage pour un prétensionneur de ceinture et détecteur de fonctionnement de ceinture

(30) Priorität: 07.10.1998 DE 19846113
(43) Veröffentlichungstag der Anmeldung: 13.03.2002
(62) Teilanmeldung aus: 99942738.8
(73) Patentinhaber: ROBERT BOSCH GMBH, 70442 Stuttgart (DE)
(72) Erfinder: Mattes, Bernhard, 74343 Sachsenheim (DE)

(56) Entgegenhaltungen:
- DE-A- 19 505 334
- US-A- 5 742 986
- US-A- 5 879 024

## Beschreibung

### Stand der Technik

Die vorliegende Erfindung betrifft eine Schaltungsanordnung, bestehend aus einem Zündelement für einen Gurtstraffer und einem Gurtbetriebssensor, welche über ein gemeinsames Leitungspaar mit einer das Zündelement diagnostizierenden und den Gurtbetriebssensor auswertenden Steuereinheit verbindbar sind.

Eine solche Schaltungsanordnung ist aus der DE 195 05 334 A1 bekannt. Diese bekannte Schaltungsanordnung besitzt ein die Betriebslage des Sicherheitsgurtes kennzeichnendes Schaltelement. Damit soll auf elektronischem Wege eine Erkennung der Betriebslagen des Sicherheitsgurtes ermöglicht werden. Es soll also erkennbar sein, ob der Gurt ordnungsgemäß in das Gurtschloß eingesteckt ist oder nicht, wenn sich eine Person auf dem Sitz des Fahrzeugs befindet. Gegebenenfalls soll dann bei nicht ordnungsgemäß gestecktem Sicherheitsgurt ein Warnsignal abgegeben werden. Gemäß dieser Druckschrift sind sowohl der Gurtbetriebssensor als auch das Zündelement für den Gurtstraffer über ein gemeinsames symmetrisches Leitungspaar an eine Steuereinrichtung geschaltet. Dadurch, daß nicht der Gurtbetriebssensor und das Zündelement über eigene Leitungen an die Steuereinheit angeschaltet sind, verringert sich das Risiko, daß über viele Leitungen auch viele Störsignale eingekoppelt werden können. Außerdem wird dadurch die Kabelbaum-Komplexität und die Anzahl der benötigten Steckerkontakte verringert. Nach der DE 195 05 334 A1 sind das Zündelement für den Gurtstraffer und ein Gurtschloßschalter, der als Gurtbetriebssensor dient, parallel an ein gemeinsames Leitungspaar angeschaltet. Zudem ist dem Gurtschloßschalter noch ein Widerstand in Reihe und ein weiterer Widerstand parallel geschaltet.

Der Erfindung liegt die Aufgabe zugrunde, eine Schaltungsanordnung der eingangs genannten Art anzugeben, mit der der Gurtbetrieb eindeutig ermittelt und der Zustand des Zündelements zuverlässig diagnostiziert werden kann.

### Vorteile der Erfindung

Die genannte Aufgabe wird mit den Merkmalen des Anspruchs 1 gelöst.

Gemäß Anspruch 1 besteht die Schaltungsanordnung darin, daß zu dem Zündelement ein hochohmiger Widerstand parallel geschaltet ist, daß zu der Parallelschaltung aus dem Zündelement und dem Widerstand ein elektrisch steuerbarer Schalter in Reihe geschaltet ist und diese Reihenschaltung an die beiden Leitungen angeschlossen ist, und daß ein magnetfeldsensitives Element vorhanden ist, das eine Steuerspannung für den Schalter erzeugt, welche von einem von einer in das Gurtschloß eingesteckten Gurtzunge beeinflußten Magnetfeld abhängt. Ein Vorteil dieser Schaltungsanordnung besteht darin, daß sie als Gurtbetriebssensor nicht einen mechanischen Schalter, der verschmutzungsempfindlich ist, aufweist, sondern durch den Einsatz eines magnetfeldsensitiven Elements völlig verschleißfrei, verschmutzungsunempfindlich und berührungslos schaltend ist.

Gemäß Unteransprüchen ist es zweckmäßig, daß das Magnetfeld sensitive Element ein Hallelement ist.

Gemäß einer Weiterbildung der Schaltungsanordnung ist der Parallelschaltung aus Zündelement und Widerstand ein Kondensator zwischen den beiden Leitungen in Reihe geschaltet, der von der Steuereinheit einen Ladestrom erhält, wobei sich der Kondensator zyklisch auflädt und entlädt, und sein Entladestrom durch das magnetfeldsensitive Element fließt, so daß in dieser Phase das magnetfeldsensitive Element eine den Schalter schließende Steuerspannung erzeugt. Während des nach der Entladung des Kondensators folgenden Aufladevorgangs bleibt der Schalter aufgrund einer nicht ausreichenden Steuerspannung des magnetfeldsensitiven Elements geöffnet. Die Steuereinheit kann nun aus dem Tastverhältnis von Öffnen und Schließen des Schalters, das sich bei im Gurtschloß eingerasteter Gurtzunge gegenüber dem Tastverhältnis bei nicht eingerasteter Gurtzunge unterscheidet, den Gurtbetrieb erfassen. Oder die Steuereinheit kann aus dem Strom auf den Leitungen, der bei eingerasteter Gurtzunge größer ist als bei nicht eingerastetet Gurtzunge den Gurtbetrieb erfassen, wobei die Steuereinheit den Strom während der Öffnungsphasen des Schalters mißt. Die Diagnose des Zündelements führt die Steuereinheit während der Schließphasen des Schalters durch.

### Beschreibung von Ausführungsbeispielen

Anhand zweier in der Zeichnung dargestellter Ausführungsbeispiele wird nachfolgend die Erfindung näher erläutert. Es zeigen:
Figur 2 ein erstes Ausführungsbeispiel einer Schaltungsanordnung, bestehend aus einem Zündelement für einen Gurtstraffer und einem Gurtbetriebssensor,
Figur 3a einen Lade- und Entladezyklus eines Kondensators und den Schaltzyklus eines elektrischen Schalters bei nicht eingerastetem Gurt und
Figur 3b einen Lade- und Entladezyklus eines Kondensators und den Schaltzyklus eines elektrischen Schalters bei eingerastetem Gurt.

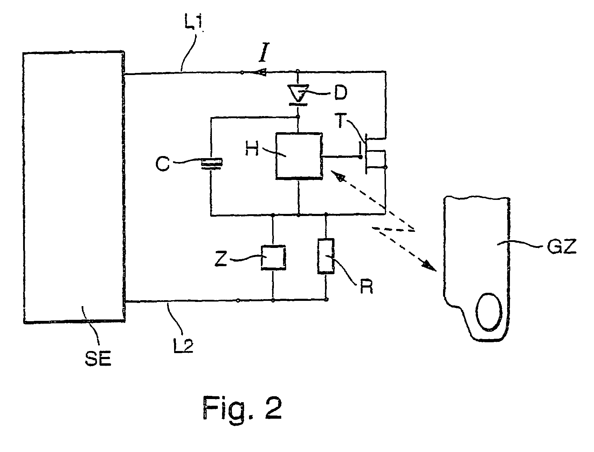

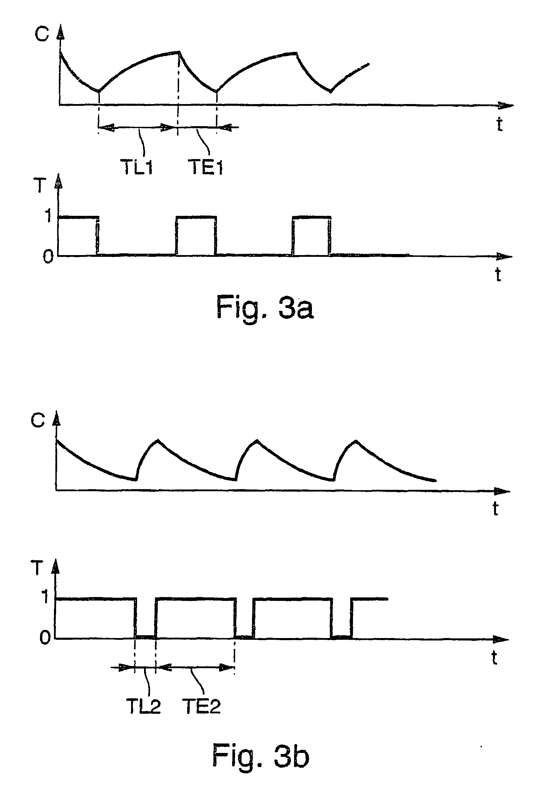

Bei dem in Figur 2 dargestellten Ausführungsbeispiel ist an die Steuereinheit SE über das Leitungspaar L1, L2 folgende Schaltungsanordnungen angeschlossen. Zu dem Zündelement Z ist ein hochohmiger Widerstand R (z.B. 10kΩ) parallel geschaltet. In Reihe zu dieser Parallelschaltung ist ein elektrisch steuerbarer Schalter D, vorzugsweise ein MOSFET T, geschaltet. Außerdem ist zu der Parallelschaltung aus dem Zündelement Z und dem hochohmigen Widerstand R ein magnetfeldsensitives Element, vorzugsweise ein Hallelement H, und eine Diode D in Reihe geschaltet. Parallel zu dem magnetfeldsensitiven Element H ist ein Kondensator C, vorzugsweise ein Elektrolytkondensator (z.B. 47 µF), parallel geschaltet.

In bekannter Weise nutzt das Hall-Element H eine Ablenkung eines zwischen den mit dem Kondensator C verbundenen Anschlußpolen fließenden Stromes durch ein senkrecht dazu stehendes magnetisches Feld aus. Das magnetische Feld rührt hier, wie durch den strichliert gezeichneten gezackten Pfeil angedeutet, von einer Gurtzunge GZ her, die, wenn sie in das Gurtschloß eingerastet ist, mit ihrem Magnetfeld auf das Hallelment H einwirkt. Eine Ladungsträgerverschiebung in Richtung des magnetischen Feldes führt dabei zum Entstehen einer sogenannten Hallspannung, die quer zur Stromflußrichtung abgreifbar ist. Diese Hallspannung dient als Steuerspannung für den elektrisch steuerbaren Schalter T.

Anhand der Figuren 3a und 3b soll nun die Funktionsweise der Schaltungsanordnung erläutert werden. In den Figuren 3a und 3b ist jeweils der Lade- /Entladezyklus des Kondensators C und der zugehörige Schaltzyklus des elektrisch steuerbaren Schalters T dargestellt. Die Figur 3a zeigt die Verläufe für den Fall, daß die Gurtzunge GZ in das Gurtschloß nicht eingerastet ist, und die Figur 3b zeigt die Verläufe bei eingerasteter Gurtzunge.

Es wird davon ausgegangen, daß zunächst der elektrisch steuerbare Schalter T geöffnet und der Kondensator C zumindest teilweise entladen ist. Dann ist die Diode D auf Durchlaß geschaltet. Der Kondensator C wird dann in der Zeit TL1 (siehe Figur 3a) durch einen aus der Steuereinheit SE fließenden Strom über die Diode D und die Parallelschaltung aus dem Zündelement Z und dem Widerstand R aufgeladen. Ab einem bestimmten Ladezustand des Kondensators C fließt in der Zeit TE1 (siehe Figur 3a) ein Strom durch das Hallelement H, so daß die von dem Hallelement H abgegebene Steuerspannung ausreicht, um den Schalter T zu schließen. Jetzt ist die Diode D gesperrt. Der Kondensator C entlädt sich in der Zeit TE1 über das Hallelement H bis der Strom durch das Hallelement H nicht mehr ausreicht, um eine so große Steuerspannung zu erzeugen, daß der Schalter T noch weiterhin schließt. Nach einer gewissen Entladung des Kondensators C, nach der Zeitspanne TE1, öffnet der Schalter T wieder. Dann ist die Diode D in Durchlaßrichtung geschaltet und der Kondensator wird erneut aufgeladen usw.

Wie aus der Figur 3a hervorgeht, ist der Schalter T in den Entladezeiten TE1 des Kondensators C geschlossen und in den Aufladezeiten TL1 geöffnet. Wie ein Vergleich der beiden Figuren 3a und 3b verdeutlicht, ist das Tastverhältnis TL1/TE1 bei nicht eingerastetem Gurt deutlich anders als das Tastverhältnis TL2/TE2 bei eingerastetem Gurt. Das liegt daran, daß aufgrund eines magnetischen Feldes, auf das die eingerastete Gurtzunge GZ einen Einfluß hat, das Hallelement H einen geringeren Strom aufnimmt, weshalb der Kondensator C langsamer entladen wird. Während der Schalter T geschlossen ist, fällt die Spannung zwischen den beiden Leitungen L1 und L2 auf z.B. 0,3 Volt ab, und bei geöffnetem Schalter T steigt die Spannung zwischen den Leitungen L1 und L2 auf z.B. 8 Volt an. Diesen Spannungsunterschied registriert die Steuereinheit SE und kann daraus das Tastverhältnis des Schalters T ableiten und eindeutig identifizieren, ob der Gurt eingerastet ist oder nicht.

Die Steuereinheit SE kann sowohl bei eingerastetem Gurt als auch bei nicht eingerastetem Gurt in den Phasen, in denen der Schalter T geschlossen ist, eine Diagnose des Zündelements Z durchführen. Aufgrund des hochohmigen Widerstandes R, der dem niederohmigen Zündelement Z parallel geschaltet ist, läßt sich der Widerstand des Zündelements Z sehr genau messen und anhand des gemessenen Widerstandes auch sehr gut unterscheiden, ob ein Leitungsbruch oder ein Kurzschluß beim Zündelement Z vorliegt.

Das Steuergerät SE kann auch durch eine Strommessung die Gurtbetriebslage erkennen. Je nachdem ob der Gurt eingerastet ist oder nicht, also die Gurtzunge GZ einen Einfluß auf das Magnetfeld im Hallelement H ausübt, fließt ein mehr oder weniger großer Strom I durch das Hallelement H. Bei eingerastetem Gurt fließt z.B. ein Strom von maximal 17 mA auf den Leitungen L1, L2, und bei nicht eingerastetem Gurt fließt z.B. ein Strom von maximal 5mA. Dieser Unterschied von ca. 10 mA reicht für die Steuereinheit SE aus, um die Gurtbetriebslage zu erkennen. Diese Strommessung führt die Steuereinheit SE in Öffnungsphasen TL1, TL2 des Schalters T durch.

## Patentansprüche

1. Schaltungsanordnung, bestehend aus einem Zündelement für einen Gurtstraffer und einem Gurtbetriebssensor, welche über ein gemeinsames Leitungspaar mit einer das Zündelement diagnostizierenden und den Gurtbetriebssensor auswertenden Steuereinheit verbindbar sind, **dadurch gekennzeichnet, daß** zu dem Zündelement (Z) ein hochohmiger Widerstand (R) parallel geschaltet ist, daß zu der Parallelschaltung aus dem Zündelement (Z) und dem Widerstand (R) ein steuerbarer Schalter (T) in Reihe geschaltet ist und diese Reihenschaltung an die beiden Leitungen (L1, L2) angeschlossen ist, und daß ein magnetfeldsensitives Element (H) vorhanden ist, das eine Steuerspannung für den Schalter (T) erzeugt, welche von einem von einer in das Gurtschloß eingesteckten Gurtzunge (GZ) beeinflußten Magnetfeld abhängt.

2. Schaltungsanordnung nach Anspruch 1, **dadurch gekennzeichnet, daß** das magnetfeldsensitive Element ein Hallelement (H) ist.

3. Schaltungsanordnung nach Anspruch 1, **dadurch gekennzeichnet, daß** der Parallelschaltung aus Zündelement (Z) und Widerstand (R) ein Kondensator (C) zwischen den beiden Leitungen (L1, L2) in Reihe geschaltet ist, der von der Steuereinheit (SE) einen Ladestrom erhält, daß sich der Kondenstator (C) zyklisch auflädt und entlädt, wobei sein Entladestrom durch das magnetfeldsensitive Element (H) fließt, so daß in dieser Phase das magnetfeldsensitive Element (H) eine den Schalter (T) schließende Steuerspannung erzeugt, und daß während des nach der Entladung des Kondensators (C) folgenden Aufladevorgangs der Schalter (T) aufgrund einer nicht ausreichenden Steuerspannung des magnetfeldsensitiven Elements (H) geöffnet bleibt.

4. Schaltungsanordnung nach Anspruch 3, **dadurch gekennzeichnet, daß** die Steuereinheit (SE) aus dem Tastverhältnis von Öffnen und Schließen des Schalters (T), das sich bei im Gurtschloß eingerasteter Gurtzunge (GZ) gegenüber dem Tastverhältnis bei nicht eingerasteter Gurtzunge (GZ) unterscheidet, den Gurtbetrieb erfaßt.

5. Schaltungsanordnung nach Anspruch 3, **dadurch gekennzeichnet, daß** die Steuereinheit (SE) aus dem Strom (I) auf den Leitungen (L1, L2), der bei eingerasteter Gurtzunge (GZ) größer ist als bei nicht eingerasteter Gurtzunge (GZ), den Gurtbetrieb erfaßt, wobei die Steuereinheit (SE) den Strom (I) während der Öffnungsphasen des Schalters (T) mißt.

6. Schaltungsanordnung nach einem der Ansprüche 3 bis 5, **dadurch gekennzeichnet, daß** die Steuereinheit (SE) die Diagnose des Zündelements (7) während der Schließphasen des Schalters (T) durchführt.

## Claims

1. Circuit arrangement composed of a firing element for a seat belt pretensioner and a seat belt operating sensor, which can be connected via a common pair of lines to a control unit which diagnoses the firing element and evaluates the seat belt operating sensor, **characterized in that** a high-impedance resistor (R) is connected in parallel with the firing element (Z), **in that** the controllable switch (T) is connected in series with the parallel circuit composed of the firing element (Z) and the resistor (R), and this series circuit is connected to the two lines (L1, L2), and **in that** there is an element (H) which is sensitive to magnetic fields and generates a control voltage for the switch (T), which voltage depends on a magnetic field which is influenced by a seat belt tongue (GZ) which is inserted into the seat belt lock.

2. Circuit arrangement according to Claim 1, **characterized in that** the element which is sensitive to magnetic fields is a Hall element (H).

3. Circuit arrangement according to Claim 1, **characterized in that** a capacitor (C) between the two lines (L1, L2) is connected in series with the parallel circuit composed of firing element (Z) and resistor (R), which capacitor (C) receives a charge current from the control unit (SE), **in that** the capacitor (C) charges and discharges cyclically, its discharge current running through the element (H) which is sensitive to magnetic fields, with the result that in this phase the element (H) which is sensitive to magnetic fields generates a control voltage which closes the switch (T), and **in that** the switch (T) remains opened during the charging process which follows the discharging of the capacitor (C), owing to an insufficient control voltage of the element (H) which is sensitive to magnetic fields.

4. Circuit arrangement according to Claim 3, **characterized in that** the control unit (SE) senses the seat belt operation from the pulse duty factor of the opening and closing of the switch (T) which differs with respect to the pulse duty factor when the seat belt tongue (GZ) is engaged in the seat belt lock in comparison with when the seat belt tongue (GZ) is not engaged.

5. Circuit arrangement according to Claim 1, **characterized in that** the control unit (SE) senses the seat belt operation from the current (I) on the lines (L1, L2) which is greater when the seat belt tongue (GZ) is engaged than when the seat belt tongue (GZ) is not engaged, the control unit (SE) measuring the current (I) during the opening phases of the switch (T).

6. Circuit arrangement according to one of Claims 3 to 5, **characterized in that** the control unit (SE) carries out the diagnosis of the firing element (7) during the closing phases of the switch (T).

## Revendications

1. Circuit comprenant un élément d'amorçage pour un prétensionneur de ceinture et un détecteur de fonctionnement de la ceinture, qu'on peut relier au moyen d'une paire commune de conducteurs à une unité de commande qui diagnostique l'élément d'amorçage et évalue le détecteur de fonctionnement de la ceinture,
**caractérisé en ce qu'**
une résistance fortement ohmique (R) est branchée en parallèle sur l'élément d'amorçage (Z),
un commutateur commandé (T) est branché en série sur le montage en parallèle composé de l'élément d'amorçage (Z) et de la résistance (R) et ce montage en série est raccordé aux deux lignes (L1, L2), et
un élément magnétosensible (H) crée une tension de commande pour le commutateur (T), cette tension dépendant du champ magnétique influencé par une lame de ceinture (GZ) engagée dans la serrure de ceinture.

2. Circuit selon la revendication 1,
**caractérisé en ce que**
l'élément magnétosensible est un élément Hall (H).

3. Circuit selon la revendication 1,
**caractérisé en ce que**
le montage en parallèle composé de l'élément d'amorçage (Z) et de la résistance (R) comprend un condensateur (C) branché en série entre les deux lignes (L1, L2), ce condensateur recevant un courant de charge de l'unité de commande (SE),
ce condensateur (C) se chargeant et se déchargeant de manière cyclique et son courant de décharge traverse l'élément magnétosensible (H) de façon qu'au cours de cette phase l'élément magnétosensible (H) génère une tension de commande fermant le commutateur (T), et
pendant l'opération de charge qui suit la décharge du condensateur (C), le commutateur (T) reste ouvert du fait de la tension de commande insuffisante fournie par l'élément magnétosensible (H).

4. Circuit selon la revendication 3,
**caractérisé en ce que**
l'unité de commande (SE) saisit le fonctionnement de la ceinture à partir du rapport de travail entre l'ouverture et la fermeture du commutateur (T) qui, lorsque la lame de ceinture (GZ) est engagée dans la serrure de ceinture, se distingue du rapport de travail lorsque la lame de ceinture (GZ) n'est pas engagée.

5. Circuit selon la revendication 3,
**caractérisé en ce que**
l'unité de commande (SE) saisit le fonctionnement de la ceinture à partir du courant (I) dans les lignes (L1, L2) et qui lorsque la lame de ceinture (GZ) est engagée, est supérieur à ce qu'il est lorsque la lame de ceinture (GZ) n'est pas engagée, l'unité de commande (SE) mesurant le courant (I) pendant les phases d'ouverture du commutateur (T).

6. Circuit selon l'une des revendications 3 à 5,
**caractérisé en ce que**
l'unité de commande (SE) effectue le diagnostic de l'élément d'amorçage (Z) pendant les phases de fermeture du commutateur (T).
